# EUROPÄISCHE PATENTANMELDUNG

(11) **EP 1 028 262 A1**
(43) Veröffentlichungstag der Anmeldung: **16.08.2000**
(21) Anmeldenummer: 99810129.9
(22) Anmeldetag: 12.02.1999
(51) Int. Cl.: F16C 39/06

(54) **Elektromagnetische Lagervorrichtung**

(71) Anmelder: Sulzer Electronics AG, 8409 Winterthur (CH); LUST ANTRIEBSTECHNIK GmbH, D-35633 Lahnau (DE)
(72) Erfinder: Schöb, Reto, Dr., 8604 Volketswil (CH)
(74) Vertreter: Sulzer Management AG

(57) **Zusammenfassung**

Eine elektromagnetische Lagervorrichtung zur berührungslosen Lagerung einer Welle (2) bezüglich einer durch eine Längsachse (A) festgelegten axialen Richtung umfasst mindestens zwei axial beabstandete Lagerscheiben (3), die fest mit der Welle (2) verbunden sind und sich jeweils in radialer Richtung erstrecken, sowie einen die Welle (2) umgebenden Stator (4), welcher einen Permanentmagneten (7) zum Erzeugen eines permanentmagnetischen Flusses aufweist, der eine Lagerkraft auf die Lagerscheiben (3) bewirkt, und welcher Stator (4) elektrische Wicklungen (6) zum Erzeugen eines magnetischen Steuerflusses aufweist. Der Stator (4) umschliesst die Lagerscheiben (3) radial.

## Beschreibung

Die Erfindung betrifft eine elektromagnetische Lagervorrichtung zur berührungslosen Lagerung einer Welle bezüglich einer axialen Richtung gemäss dem Oberbegriff des unabhängigen Anspruchs.

Elektromagnetische Lager, mit denen rotierende Wellen, sonstige Rotoren oder auch nicht drehende Körper berührungslos gelagert werden können, gewinnen immer mehr an Bedeutung, weil sie ein praktisch reibungsfreies Lager darstellen und zudem für kritische Anwendungen, z. B. in Verbindung mit hochreinen Flüssigkeiten oder mit aggressiven Substanzen, die mechanische Lager in Kürze zerstören würden, geeignet sind. Magnetische Lager basieren auf dem Prinzip, den zu lagernden Körper mittels magnetischer Kräfte in einem Stator berührungslos zu lagern.

Bei bekannten aktiven magnetischen Axiallagern, mit denen rotierende Wellen bezüglich der axialen Richtung in einer Soll-Position gehalten werden, ist typischerweise mindestens eine magnetisierbare, beispielsweise ferromagnetische Lagerscheibe vorgesehen, die fest mit der Welle verbunden ist und sich in radialer Richtung erstreckt. Im Stator sind zwei Spulen mit elektrischen Wicklungen vorgesehen, welche den axialen Begrenzungsflächen der Lagerscheibe gegenüberliegen. Mittels der Spulen und einer geeigneten Versorgungs- und Regeleinheit wird dann ein magnetischer Fluss erzeugt, welcher die Lagerscheibe in einer mittigen Soll-Position zwischen den beiden Spulen hält. Bekannterweise wird bei solchen Magnetlagern, in denen die Magnetfelder nur mit elektrischen Strömen generiert werden, ständig ein konstanter Vormagnetiesierungsstrom durch die Spulen geschickt, der einen magnetischen Fluss erzeugt, welcher das Lager magnetisch vorspannt. Diesem Fluss wird ein ebenfalls elektrisch erzeugter magnetischer Steuerfluss überlagert, mit dem die axiale Position der Welle geregelt wird. Der Vormagnetisierungsstrom dient dazu, den Zusammenhang zwischen dem eingeprägten Strom und der resultierenden magnetischen Kraft zu linearisieren.

Solche Axiallager haben jedoch den Nachteil, dass sie energetisch ungünstig sind, weil hohe Ströme benötigt werden und der Vormagnetisierungsstrom erhebliche Verluste erzeugt. Zudem ist für jede der beiden Spulen ein separater Leistungsverstärker vonnöten. In der WO-A-95/05700 wird deshalb ein magnetisches Axiallager vorgeschlagen, bei welchem die magnetische Vorspannung mittels eines Permanentmagneten erzeugt wird und der Steuerfluss mittels Spulen. Auf der zu lagernden Welle sind axial beabstandet zwei Lagerscheiben fixiert, die sich in radialer Richtung erstrecken. Der Stator weist zwei Spulen auf, die jeweils die Welle umgeben und bezüglich der axialen Richtung so zwischen den Lagerscheiben angeordnet sind, dass die Spulen jeweils einer axialen Begrenzungsfläche einer Lagerscheibe gegenüberliegen. Die beiden Spulen sind in einem gemeinsamen Spulengehäuse angeordnet, welches sich in axialer Richtung zwischen den beiden Lagerscheiben erstreckt. Das Spulengehäuse, welches der Flussführung dient, umgibt die beiden Spulen derart, dass sich seine innere Wand bezüglich der radialen Richtung zwischen den Spulen und der Welle befindet und seine äussere Wand die Spulen radial umschliesst. Somit kann der von den Spulen generierte Fluss über diese beiden Wände und die Lagerscheiben geführt werden. Zwischen den beiden Spulen ist in dem Spulengehäuse ein Permanentmagnet vorgesehen, der als radial magnetisierte Ringscheibe ausgestaltet ist und die Welle umgibt. Der von dem radial magnetisierten Permanentmagnet erzeugte Fluss wird durch die äussere Wand des Spulengehäuses in die axiale Richtung umgelenkt und zu den Lagerscheiben geführt. Von diesen wird der Fluss in radialer Richtung zu der inneren Wand des Spulengehäuses geführt, welche den Fluss in axialer Richtung zurück zum Permanentmagnet führt.

Durch die Kombination eines konstanten permanentmagnetisch erzeugten Flusses, der das Axiallager vorspannt, mit einem elektrisch erzeugten Fluss zur Regelung der axialen Position der Welle lässt sich ein unter energetischen Aspekten deutlich günstigeres Magnetlager herstellen.

Ausgehend von diesem Stand der Technik ist es eine Aufgabe der Erfindung, eine verbesserte und wirkungsvollere elektromagnetische Lagervorrichtung vorzuschlagen, mit welcher eine rotierbare Welle zuverlässig bezüglich der axialen Richtung berührungslos gelagert werden kann.

Die diese Aufgabe lösende elektromagnetische Lagervorrichtung ist durch die Merkmale des unabhängigen Anspruchs gekennzeichnett.

Erfindungsgemäss wird also eine elektromagnetische Lagervorrichtung zur berührungslosen Lagerung einer Welle bezüglich einer durch eine Längsachse festgelegten axialen Richtung vorgeschlagen, welche mindestens zwei axial beabstandete Lagerscheiben, die fest mit der Welle verbunden sind und sich jeweils in radialer Richtung erstrecken, sowie einen die Welle umgebenden Stator umfasst. Der Stator weist einen Permanentmagneten zum Erzeugen eines permanentmagnetischen Flusses auf, der eine Lagerkraft auf die Lagerscheiben bewirkt, und ferner elektrische Wicklungen zum Erzeugen eines magnetischen Steuerflusses. Der Stator umschliesst die Lagerscheiben radial, das heisst insbesondere, dass die radial äusseren Begrenzungsflächen der Lagerscheiben innerhalb des Stators liegen.

Durch diese Massnahme ist es möglich, die elektrischen Wicklungen des Stators so anzuordnen, dass sie sich bezüglich der radialen Richtung nicht mit den Lagerscheiben überlappen. Vorzugsweise sind die elektrischen Wicklungen den radial äusseren Begrenzungsflächen der Lagerscheiben gegenüberliegend angeordnet. Sind die elektrischen Wicklungen z. B. in Form von Ringspulen ausgestaltet, welche die Welle umgeben, ist der Innenradius der Ringspulen grösser der Aussenradius der Lagerscheiben. Da die elektrischen Wicklungen die Lagerscheiben bezüglich der radialen Richtung nicht überlappen, steht die gesamte Fläche des Stators, die den axialen Begrenzungsflächen der Lagerscheiben gegenüberliegt, für die Übertragung des magnetischen Flusses zwischen Stator und Lagerscheiben und damit für die Krafterzeugung zur Verfügung. Dies ist ein wesentlicher Unterschied zu bekannten Lagervorrichtungen, bei denen ein erheblicher Teil der Flächen des Stators, die den axialen Begrenzungsflächen der Lagerscheiben gegenüberliegen, von den Spulen eingenommen wird und daher für die Krafterzeugung bzw. für die Flusskopplung zwischen Stator und Lagerscheiben nicht zur Verfügung steht. Da bezüglich der radialen Richtung beiderseits der Spulen noch genügend Fläche vorhanden sein muss, um den magnetischen Fluss zu den Lagerscheiben hinzuführen bzw. von den Lagerscheiben zurückzuführen, kann der Aussenradius der Lagerscheiben bei den bekannten Lagervorrichtungen ein gewisses Mindestmass nicht unterschreiten.

Da bei der erfindungsgemässen Lagervorrichtung die gesamten Flächen des Stators, die den axialen Begrenzungsflächen der Lagerscheiben gegenüberliegen, für die Flusskopplung und damit für die Krafterzeugung zur Verfügung stehen, können die Lagerscheiben folglich mit deutlich kleinerem Aussenradius ausgebildet werden, ohne dass sich dadurch die maximale Lagerkraft reduziert. Ein kleinerer Aussenradius der Lagerscheiben ist aber aus mehreren Gründen vorteilhaft. Die zu lagernde Welle kann mit höheren Drehzahlen rotiert werden, denn durch den kleineren Radius der Lagerscheiben sind die internen Spannungen in den Lagerscheiben, die beispielsweise durch Zentrifugalkräfte verursacht werden, geringer. Dies ist auch im Hinblick auf die zu berücksichtigenden Materialeigenschaften der Lagerscheiben vorteilhaft. Ferner hat der kleinere Aussenradius der Lagerscheiben den Vorteil, dass die Kippneigung der Welle deutlich geringer ist, wodurch die Radiallager entlastet werden.

Andererseits können aufgrund der grossen Flächen, die für die Flusskopplung zwischen Stator und Lagerscheiben zur Verfügung stehen, magnetische Lager realisiert werden, mit denen deutlich höhere axiale Lagerkräfte generierbar sind als mit bekannten magnetischen Axiallagern, sodass eine grössere axiale Tragfähigkeit bzw. Kapazität des Lagers resultiert.

Der Permanentmagnet zur Erzeugung der Vorspannung der Lagervorrichtung ist vorzugsweise axial magnetisiert, weil ein solcher Magnet wesentlich einfacher und damit kostengünstiger herzustellen ist als beispielsweise ein radial magnetisierter permanentmagnetischer Ring wie er in der Vorrichtung gemäss der WO-A-95/05700 enthalten ist.

In einem bevorzugten Ausführungsbeispiel umfasst der Stator mindestens zwei bezüglich der axialen Richtung hintereinander angeordnete Lagerstellen, die jeweils zwei radial nach innen verlaufende Schenkel sowie ein im wesentlichen parallel zur Längsachse verlaufendes, die Schenkel verbindendes Basisteil aufweisen, sodass die Schenkel zusammen mit dem Basisteil ein im wesentlichen U-förmiges Profil bilden. Ferner ist jede Lagerscheibe so angeordnet, dass sie sich jeweils zwischen die beiden Schenkel einer Lagerstelle erstreckt, und an jedem Basisteil ist eine als Spule ausgestaltete elektrische Wicklung vorgesehen, welche der radial äusseren Begrenzungsfläche einer Lagerscheibe gegenüberliegt. Zwischen den beiden axial benachbarten Lagerstellen ist ein Permanentmagnet angeordnet, der vorzugsweise als axial magnetisierte Ringscheibe ausgestaltet ist, welche die Welle umgibt.

Diese Ausführungsform stellt ein kompaktes und sehr leistungsfähiges magnetisches Axiallager mit hoher Lagerkapazität dar. Im Unterschied zu bekannten Lagervorrichtungen werden nämlich jeweils beide axialen Begrenzungsflächen der Lagerscheiben für die Kraftbildung ausgenutzt unter Verwendung nur einer Spule pro Lagerscheibe. Dies bedeutet, dass ein solches erfindungsgemässes Axiallager im wesentlichen die gleiche Tragkraft erzeugen kann wie zwei konventionelle Lager. Folglich ist das Verhältnis aus Lagerkapazität und Platzbedarf deutlich günstiger.

Die erfindungsgemässe Lagervorrichtung hat ferner den Vorteil, dass sie eine sehr einfache Kaskadierung ermöglicht, womit gemeint ist, dass sich problemlos mehrere Lagervorrichtungen oder Lagerstellen hintereinander, also axial benachbart, anordnen lassen. Durch einfaches Hinzufügen weiterer Lagerstellen und Lagerscheiben lässt sich somit die Lagerkapazität noch weiter erhöhen. Dabei ist jeweils zwischen zwei benachbarten Lagerstellen ein Permanentmagnet vorgesehen, wobei jeder Permanentmagnet in entgegengesetzter Richtung axial magnetisiert ist wie der ihm vorangehend angeordnete Permanentmagnet.

Gemäss einer bevorzugten Variante sind die radial innenliegenden Enden der Schenkel als ausgeprägte Pole ausgebildet. Diese Variante hat den Vorteil, dass die Welle zusätzlich radial durch Reluktanzkräfte passiv magnetisch stabilisiert ist, sodass beispielsweise die magnetischen Radiallager entlastet bzw. unterstützt werden.

Die erfindungsgemässe elektromagnetische Lagervorrichtung lässt sich auch als linearer, vorzugsweise bistabiler, Aktuator verwenden.

Weitere vorteilhafte Massnahmen und bevorzugte Ausgestaltungen der erfindungsgemässen elektromagnetischen Lagervorrichtung ergeben sich aus den abhängigen Ansprüchen.

Im Folgenden wird die Erfindung anhand von Ausführungsbeispielen und anhand der Zeichnung näher erläutert. In der schematischen, nicht massstäblichen Zeichnung, in der identische oder von der Funktion her gleichwertige Teile mit den gleichen Bezugszeichen versehen sind, zeigen:
- Fig. 1:: Einen Längsschnitt durch ein erstes Ausführungsbeispiel der erfindungsgemässen elektromagnetischen Lagervorrichtung,
- Fig. 2:: eine Querschnitt durch das erste Ausführungsbeispiel entlang der Schnittlinie II-II in Fig. 1,
- Fig. 3:: eine Variante des ersten Ausführungsbeispiels in einer zu Fig. 1 analogen Darstellung, und
- Fig. 4:: einen Längsschnitt durch ein zweites Ausführungsbeispiel der erfindungsgemässen elektromagnetischen Lagervorrichtung.

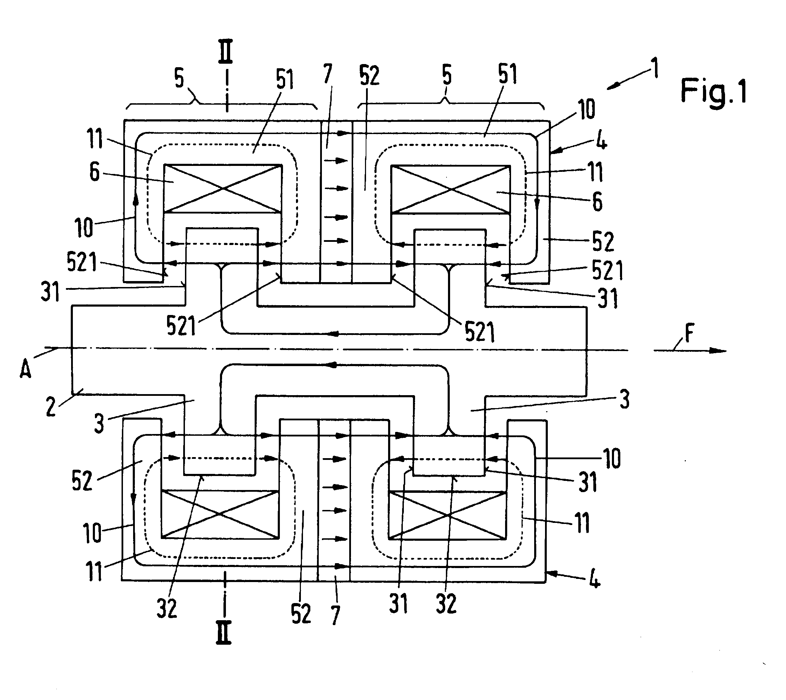

Fig. 1 zeigt in einer schematischen Darstellung einen Längsschnitt durch ein erstes Ausführungsbeispiel der erfindungsgemässen elektromagnetischen Lagervorrichtung, die gesamthaft mit dem Bezugszeichen 1 bezeichnet ist.

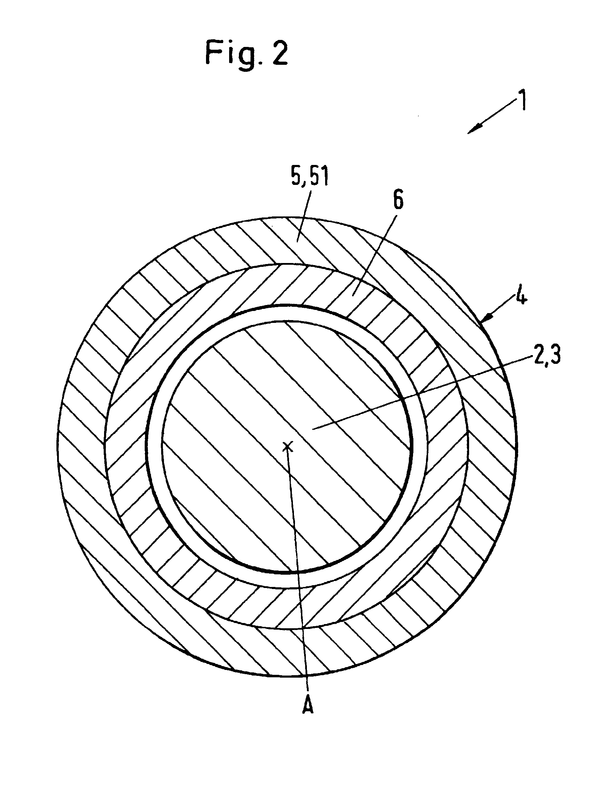

Die Längsachse der Lagervorrichtung 1 ist mit A bezeichnet. Zum besseren Verständnis zeigt Fig. 2 dieses erste Ausführungsbeispiel im Querschnitt entlang der Schnittlinie II-II in Fig. 1.

Die Lagervorrichtung 1 dient zur berührungslosen Lagerung einer rotierbaren Welle 2 bezüglich der durch die Längsachse A festgelegten Richtung, die im Folgenden als axiale Richtung bezeichnet wird. Mit radialer Richtung ist eine zur Längsachse A senkrechte Richtung gemeint. Falls sich die Welle 2 bezüglich ihrer radialen Lage in der in Fig. 1 und Fig. 2 dargestellten zentrierten Soll-Position befindet, fällt die Längsachse A mit der Achse der Welle 2 und mit der Drehachse, um welche die Welle 2 rotiert, zusammen. Die Welle 2 weist zwei axial beabstandete Lagerscheiben 3 auf, die fest mit der Welle 2 verbunden sind, und zumindest teilweise aus einem magnetisierbaren Material, vorzugsweise einem ferromagnetischen Material, insbesonders Eisen, bestehen. Die Lagerscheiben 3 erstrecken sich jeweils in radialer Richtung. Sie können integraler Bestandteil der Welle 2 sein, oder als baulich getrennte Teile ausgebildet sein, welche drehfest mit der Welle 2 verbunden werden, beispielsweise durch Aufschrumpfen.

Die Lagervorrichtung 1 weist ferner einen üblicherweise ortsfesten Stator 4 auf, der im wesentlichen rotationssymmetrisch bezüglich der Längsachse A ausgestaltet ist (siehe Fig. 2) und die Welle 2 umgibt. Der Stator 4 umfasst in diesem Ausführungsbeispiel zwei gleich aufgebaute Lagerstellen 5, die in axialer Richtung gesehen hintereinander angeordnet sind. Jede Lagerstelle 5 weist zwei radial nach innen verlaufende Schenkel 52 sowie ein axial, also parallel zur Längsachse A verlaufendes, die Schenkel 52 verbindendes Basisteil 51 auf, sodass die Schenkel 52 zusammen mit dem Basisteil 51 auf beiden Seiten der Längsachse A (gemäss der Darstellung in Fig. 1 ) jeweils ein im wesentlichen U-förmiges Profil bilden. Die Schenkel 52 sind jeweils als Ringscheibe ausgestaltet, welche die Welle 2 umgibt, und bestehen zumindest teilweise aus einem magnetisierbaren, vorzugsweise ferromagnetischen Material. Die Basisteile 51 sind jeweils ringförmig ausgebildet. Sie bestehen ebenfalls zumindest teilweise aus einem magnetisierbaren, vorzugsweise ferromagnetischen Material und sind bezüglich der axialen Richtung jeweils so zwischen zwei Schenkeln 52 angeordnet, dass sie jeweils deren radial äusseren Enden verbinden. In einer Längsschnittdarstellung wie in Fig. 1 resultiert dann das bereits erwähnte im wesentlichen U-förmige Profil, das heisst die Schnittfläche hat dann auf beiden Seiten der Längsachse A im wesentlichen die Form eines U. Natürlich können die Schenkel 52 und das Basisteil 51 auch einstückig als bauliche Einheit ausgestaltet sein.

Die Lagerscheiben 3 sind so angeordnet, dass sie sich jeweils zwischen die beiden Schenkel 51 einer Lagerstelle 5 erstrecken. Somit liegen die beiden axialen Begrenzungsflächen 31 jeder Lagerscheibe 3 jeweils einer Innenfläche 521 eines Schenkels 52 gegenüber. Mit den Innenflächen 521 sind die Flächen gemeint, welche den Schenkel 52 bezüglich des U-förmigen Profils nach innen begrenzen.

Am Basisteil jeder Lagerstelle 5 sind elektrische Wicklungen 6 vorgesehen, die jeweils eine die Welle 2 umgebende Ringspule bilden. Wie dies insbesondere Fig. 1 zeigt, sind die elektrischen Wicklungen 6 so angeordnet, dass sie jeweils der radial äusseren Begrenzungsfläche 32 einer Lagerscheibe 3 gegenüberliegen. Die Ringspulen haben somit einen Innenradius, der grösser ist als der Aussenradius der Lagerscheiben 3. Folglich umschliesst der Stator 4 die Lagerscheiben 3 radial, das heisst die Lagerscheiben 3 sind bezüglich der radialen Richtung vollständig innerhalb des Stators 4 angeordnet. Jede Lagerscheibe 3 wird "hufeisenförmig" von einer Lagerstelle 5 umgeben, wobei die elektrischen Wicklungen 6 radial aussenliegend bezüglich der Lagerscheiben 3 angeordnet sind.

Bezüglich der axialen Richtung ist zwischen den beiden Lagerstellen 5 ein Permanentmagnet 7 so angeordnet, dass er die beiden einander zugewandten Schenkel 52 der beiden benachbarten Lagerstellen 5 kontaktiert. Der Permanentmagnet 7 ist als axial magnetisierte Ringscheibe ausgestaltet, welche die Welle 2 symmetrisch zur Längsachse A umgibt. Die Magnetisierung des Permanentmagneten 7 ist durch die Pfeile (ohne Bezugszeichen) in seinem Innern symbolisch angedeutet.

Der Permanentmagnet 7 dient dazu, einen konstanten permanentmagnetischen Fluss hoher Dichte zu generieren, der den Hauptteil der axialen Lagerkraft bewirkt. Daher wird dieser Fluss im Folgenden als Hauptfluss bezeichnet. Mittels der elektrischen Wicklungen 6 wird ein magnetischer Steuerfluss erzeugt, mit welchem die axiale Position der Welle 2 stabilisiert bzw. geregelt wird. Dazu sind die elektrischen Wicklungen 6 mit einem nicht dargestellten Steuer- und Versorgungsmodul verbunden, welches die Wicklungen 6 mit elektrischer Energie versorgt und welches eine Regeleinheit umfasst, um die axiale Position der Welle 2 zu regeln. Solche Versorgungs- und Regeleinrichtungen sind an sich hinlänglich bekannt und werden daher hier nicht näher erläutert. Es versteht sich, dass mindestens ein Positionssensor zum Bestimmen der axialen Position der Welle 2 vorgesehen ist (nicht dasrgestellt), der mit der Regeleinheit verbunden ist.

Der Verlauf des vom Permanentmagnet 7 erzeugten Hauptflusses ist in Fig. 1 durch die mit dem Bezugszeichen 10 versehenen, durchgezogen dargestellten Feldlinien symbolisch angedeutet. Der Verlauf des von den elektrischen Wicklungen 6 erzeugten Steuerflusses ist durch die mit dem Bezugszeichen 11 versehenen, gepunktet dargestellten Feldlinien symbolisch veranschaulicht. Es ist zu erkennen, dass der Hauptfluss 10 vom Permanentmagnet 7 einerseits direkt durch den einen Schenkel 52 einer Lagerstelle 5 geführt wird und über den Luftspalt zwischen der Innenfläche 521 und der axialen Begrenzungsfläche 31 der Lagerscheibe 3 in die Lagerscheibe 3 fliesst, und andererseits durch das Basisteil 51 und den anderen Schenkel 52 der gleichen Lagerstelle 5 geführt wird, von wo er über den Luftspalt zwischen der anderen Innenfläche 521 und der anderen axialen Begrenzungsfläche 31 der gleichen Lagerscheibe 3 in die Lagerscheibe 3 fliesst. Von der Lagerscheibe 3 wird der Hauptfluss 10 durch die Welle 2, die zumindest teilweise, insbesondere in dem Bereich zwischen den Lagerscheiben 3, aus einem ferromagnetischen Material, z. B. Eisen, besteht, zu der zweiten Lagerscheibe 3 geführt, wo er sich aufspaltet und durch beide axialen Begrenzungsflächen 31 zurück in die andere Lagerstelle 5 und dann in den Permanentmagnet 7 fliesst. Insbesondere ist zu erkennen, dass der Hauptfluss 10 jeweils durch beide axialen Begrenzungsflächen 31 einer Lagerscheibe 3 fliesst, entweder in die Lagerscheibe 3 hinein oder aus dieser heraus, wobei die Flussrichtungen an den beiden axialen Begrenzungsflächen 31 der gleichen Lagerscheibe 3 jeweils entgegengesetzt zueinander sind.

Wie ebenfalls in Fig. 1 zu erkennen ist, fliesst der Steuerfluss 11 jeweils durch einen Schenkel 52 einer Lagerstelle 5 über den Luftspalt und die eine axiale Begrenzungsfläche 31 in die Lagerscheibe 3 hinein, tritt durch die andere axiale Begrenzungsfläche der gleichen Lagerscheibe 3 aus, und wird durch den anderen Schenkel 52 und das Basisteil 51 zurückgeführt. Der Steuerfluss 11 fliesst also stets in gleicher Richtung durch beide axialen Begrenzungsflächen 31, die zu derselben Lagerscheibe 3 gehören.

Folglich gilt für jede Lagerscheibe 3, dass sich in dem einen Luftspalt zwischen ihrer axialen Begrenzungsfläche 31 und der gegenüberliegenden Innenfläche 521 des Schenkels 52 der Hauptfluss 10 und der Steuerfluss 11 addieren, weil sie in gleicher Richtung fliessen, während in dem anderen Luftspalt der Steuerfluss 11 den Hauptfluss 10 abschwächt, weil der Steuerfluss 11 und der Hauptfluss 10 hier in entgegengesetzter Richtung fliessen. Somit kann über den Steuerfluss 11 die axiale Position der Welle 2 geregelt bzw. stabilisiert werden. Bei dem in Fig. 1 dargestellten Feldlinienverlauf resultiert beispielsweise insgesamt eine magnetische Axialkraft auf die Welle 2, deren Richtung durch den Pfeil F angezeigt ist.

Bei der erfindungsgemässen Lagervorrichtung 1 wird also die magnetische Kraft zur axialen Lagerung der Welle 2 durch die Kombination des permanentmagnetisch erregten Hauptflusses 10, welcher die Lagervorrichtung magnetisch vorspannt und den Hauptteil der Lagerkraft verursacht, und des elektrisch mittels der Wicklungen 6 erzeugten Steuerflusses 11, mit welchem die axiale Position der Welle 2 stabilisiert bzw. geregelt wird, generiert.

Die Massnahme der Vorspannung der Lagervorrichtung 1 hat den Vorteil, dass hierdurch der Zusammenhang zwischen der Kraft und dem Steuerfluss 11 im wesentlichen linear ist. Dadurch ist der Strom durch die Wicklungen 6, mit dem der Steuerfluss 11 erzeugt wird, deutlich einfacher zu regeln. Zudem ist es nicht notwendig, für jede Spule bzw. für jede der elektrischen Wicklungen 6 einen separaten Leistungsverstärker vorzusehen. Mehrere Spulen können von einem Leistungsverstärker versorgt werden. Die Spulen bzw. die elektrischen Wicklungen 6 können beispielsweise in elektrischer Parallel- oder Serienschaltung betrieben werden.

Die magnetische Vorspannung des Lagers mit dem Permanentmagnet 7 zu erzeugen, bringt den Vorteil mit sich, dass es keines Vormagnetisierungsstroms zum Erzeugen des Hauptflusses 10 bedarf. Somit ist der Energiebedarf deutlich reduziert, weil die von Vormagnetisierungsströmen verursachten hohen Verluste nicht auftreten.

Ein weiterer Vorteil der erfindungsgemässen Lagervorrichtung ist es, dass sie die Verwendung axial magnetisierter Permanentmagnete 7 insbesondere in Form von axial polarisierten Ringscheiben ermöglicht, denn solche Permanentmagnete sind deutlich einfacher und kostengünstiger herzustellen als beispielsweise radial magnetisierte Ringscheiben.

Weiterhin ist es vorteilhaft, dass der elektrisch generierte magnetische Steuerfluss 11 nicht durch den Permanentmagnet 7 geführt wird, denn Permanentmagnete sind normalerweise nur sehr schlechte Leiter für magnetische Flüsse.

Da der permanentmagnetisch erregte Hauptfluss 10 durch die Welle 2 geführt wird, ist es nicht notwendig, bezüglich der radialen Richtung zwischen dem Permanentmagnet 7 und der Welle 2 einen Rückschluss für den Fluss vorzusehen.

Ein besonderer Vorteil der Lagervorrichtung 1 ist darin zu sehen, dass sie es ermöglicht, die elektrischen Wicklungen 6 zur Erzeugung des magnetischen Steuerflussses 11 radial aussenliegend bezüglich der Lagerscheiben 3 anzuordnen. Somit stehen nämlich im wesentlichen die gesamten axialen Begrenzungsflächen 31 der Lagerscheiben 3 und die gesamten ihnen gegenüberliegenden Bereiche der Innenflächen 521 für die magnetische Flusskopplung zwischen dem Stator 4 und den Lagerscheiben 3 zur Verfügung. Vergleicht man die erfindungsgemässe Lagervorrichtung 1 mit bekannten magnetischen Axiallagern mit Lagerscheiben, die den gleichen Aussenradius aufweisen wie die erfindungsgemässe Lagervorrichtung 1, so hat die erfindungsgemässe Lagervorrichtung 1 eine wesentlich höhere Lagerkapazität, weil die magnetische Kraft von der Grösse der Fläche abhängt, die für die Flusskopplung zwischen dem Stator 4 und den Lagerscheiben 3 zur Verfügung steht.

Andererseits können bei der erfindungsgemässen Lagervorrichtung 1 die Lagerscheiben 3 mit deutlich kleinerem Aussendurchmesser ausgestaltet werden, wenn man eine vergleichbare Lagerkapazität wie in konventionelen Magnetlagern erzielen will. Ein kleiner Aussendurchmesser der Lagerscheiben 3 ist vorteilhaft, weil sich hierdurch die maxiamalen internen mechanischen Spannungen, die beim Rotieren der Welle 2 auftreten, reduzieren lassen, sodass die erfindungsgemässe Lagervorrichtung 1 insbesondere auch für sehr hohe Rotationsgeschwindigkeiten der Welle 2 geeignet ist. Zudem hat die Welle 2 bei kleinerem Aussendurchmesser der Lagerscheiben 3 eine deutlich reduzierte Kippneigung.

Zudem hat die erfindungsgemässe Lagervorrichtung 1 den Vorteil, dass beide axialen Begrenzungsflächen 31 der Lagerscheiben 3 für die Flusskopplung zwischen dem Stator 4 und den Lagerscheiben 3 genutzt werden, wobei nur eine Spule mit elektrischen Wicklungen 6 pro Lagerscheibe vorgesehen ist. Auch dies bedeutet eine Erhöhung der Lagerkapazität und eine Reduzierung des Platzbedarfs.

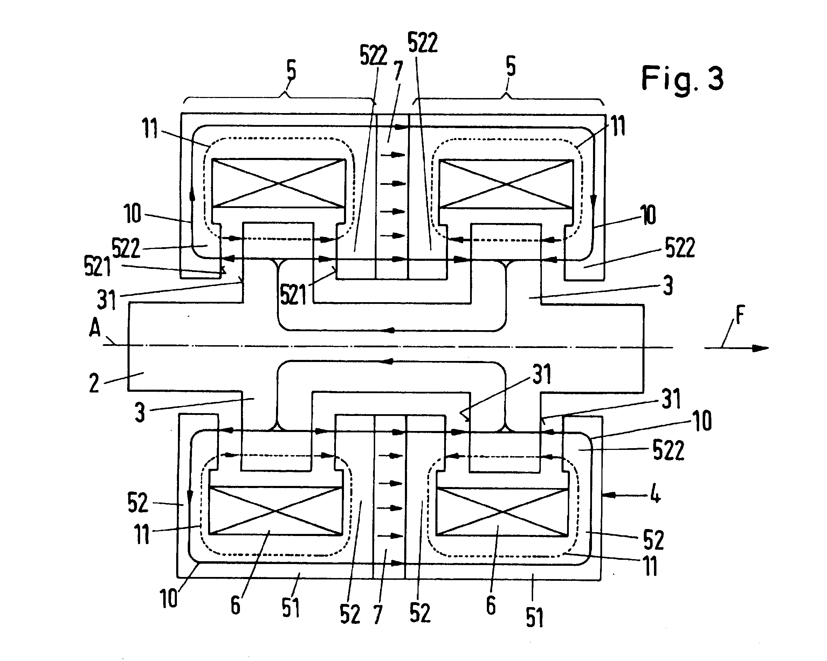

Fig. 3 zeigt eine Variante des ersten Ausführungsbeispiels in einer zu Fig. 1 analogen Darstellung. Bei dieser Variante sind die radial innenliegenden Enden der Schenkel 52 der Lagerstellen 5 jeweils als ausgeprägte Pole 522 ausgebildet. Dazu sind die Schenkel 52 jeweils an ihrem dem Basisteil 51 zugewandten Ende ausgespart, sodass die Wanddicke der Schenkel 52 (bezüglich der axialen Richtung) in dem Bereich, der den axialen Begrenzungsflächen 31 der Lagerscheiben 3 gegenüberliegt, grösser ist als die Wanddicke derjenigen Enden der Schenkel 52, die an das Basisteil 51 angrenzen. Die axial gerichteten, ausgeprägten Pole 522 haben den Vorteil, dass sie zusätzlich eine radiale magnetische Lagerung bzw. Stabilisierung der Welle 2 bewirken, wodurch beispielsweise nicht dargestellte Radiallager für die Welle 2 unterstützt werden.

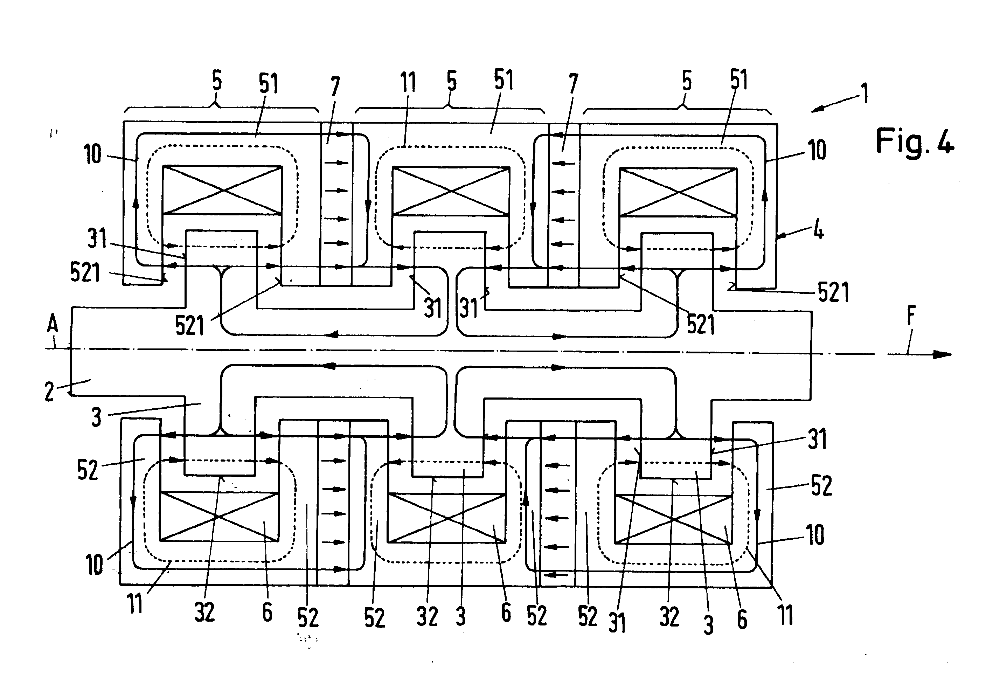

Die erfindungsgemässe Lagervorrichtung 1 hat ferner den Vorteil, dass sie sehr einfach eine Kaskadierung ermöglicht, womit gemeint ist, dass sich problemlos mehrere Lagervorrichtungen 1 bzw. Lagerstellen 5 hintereinander, also axial benachbart, anordnen lassen. Dies veranschaulicht Fig. 4 anhand eines zweiten Ausführungsbeispiels, das in einer zu Fig. 1 analogen Darstellung gezeigt ist. Die vorangehenden Erläuterungen bezüglich des ersten Ausführungsbeispiels und dessen Variante gelten in sinngemäss gleicher Weise auch für das zweite Ausführungsbeispiel. Insbesondere haben die Bezugszeichen in Fig. 4 die gleiche Bedeutung wie in den übrigen Figuren.

Bei dem in Fig. 4 dargestellten zweiten Ausführungsbeispiel umfasst der Stator 4 drei gleich ausgestaltete Lagerstellen 5, die bezüglich der axialen Richtung hintereinander angeordnet sind. Auf der Welle 2 sind drei Lagerscheiben 3 vorgesehen. Zwischen zwei benachbarten Lagerstellen 5 ist jeweils ein Permanentmagnet 7 vorgesehen, der jeweils so angeordnet ist, dass er die beiden einander zugewandten Schenkel 52 der beiden benachbarten Lagerstellen 5 kontaktiert. Jeder Permanentmagnet 7 ist als axial magnetisierte Ringscheibe ausgestaltet, welche die Welle 2 symmetrisch zur Längsachse A umgibt. Die beiden Permanentmagnete 7 sind in zueinander entgegengesetzter Richtung axial magnetisiert. Die Magnetisierung der Permanentmagnete 7 ist durch die Pfeile (ohne Bezugszeichen) in ihrem Innern symbolisch angedeutet.

An jedem Basisteil 51 ist eine elektrische Wicklung 6 in Form einer Ringspule radial aussenliegend bezüglich der Lagerscheiben 3 und den radial äusseren Begrenzungsflächen 32 der Lagerscheiben 3 gegenüberliegend angeordnet, das heisst für jede Lagerscheibe 3 ist genau eine Spule mit einer elektrischen Wicklung 6 vorgesehen.

Die Wege, entlang derer der permanentmagnetisch erregte Hauptfluss bzw. der elektrisch erregte Steuerfluss geführt wird, sind durch die durchgezogenen Feldlinien 10 bzw. die gepunkteten Feldlinien 11 symbolisch dargestellt. Es ist zu erkennen, dass für jede Lagerscheibe 3 der Hauptfluss 10 in zueinander entgegengesetzter Richtung durch die beiden axialen Begrenzungsflächen 31 der Lagerscheibe 3 fliesst, während der Steuerfluss diese beiden Begrenzungsflächen 31 in der gleichen Richtung durchfliesst, sodass die axiale Position der Welle 2 mittels des Steuerflusses 11 stabilisierbar bzw. regelbar ist.

Der Hauptfluss 10 wird wie bei dem ersten Ausführungsbeispiel von einer Lagerscheiben 3 durch die Welle 2 zu einer oder zu beiden benachbarten Lagerscheibe(n) geführt, sodass bezüglich der radialen Richtung zwischen den Permanentmagneten 7 einerseits und der Welle 2 andererseits keine gesonderten Rückführungen für den Hauptfluss 10 vonnöten sind.

Durch die Kaskadierung lässt sich die Gesamtkapazität der elektromagnetischen Lagervorrichtung 1 noch weiter erhöhen. Dies ermöglicht die Realisierung sehr kompakter, platzsparender und leistungsfähiger magnetischer Lagervorrichtungen mit sehr hoher axialer Kapazität.

Es versteht sich, dass die Variante mit den als ausgeprägte Pole 522 ausgebildeten Enden der Schenkel 52 (siehe Fig. 3) auch bei dem zweiten Ausführungsbeispiel realisiert werden kann.

Die anhand von Fig. 4 erläuterte Ausführungsform mit drei Lagerstellen 5 lässt sich natürlich in sinngemäss gleicher Weise auf noch mehr Lagerstellen 5 erweitern. Dabei ist jeder Permanentmagnet 7 zwischen zwei benachbarten Lagerstellen 5 in entgegengesetzter Richtung magnetisiert wie der ihm jeweils axial vorangehend angeordnete Permanentmagnet 7.

Die erfindungsgemässe elektromagnetische Lagervorrichtung lässt sich ferner als linearer Aktuator verwenden, insbesondere als bistabiler linearer Aktuator. Bei einer solchen Verwendung als bistabiler linearer Aktuator dient die Lagervorrichtung 1 dazu, die Welle 2 zwischen zwei stabilen Position bezüglich der axialen Richtung hin- und herzubewegen. Macht man beispielsweise den Steuerfluss 11 durch Desaktivieren der elektrischen Wicklungen zu Null, so wird sich die Welle 2 solange in axialer Richtung bewegen, bis z. B. jeweils die linken axialen Begrenzungsflächen 31 (bezüglich der Darstellung in den Fig. 1, 3 und 4) auf den ihnen zugewandten Innenflächen 521 der Schenkel 52 aufliegen. Dies ist die erste stabile Position. Durch einen entsprechend gepolten Stromimpuls auf die elektrischen Wicklungen 6, der kurzfristig ein magnetisches Steuerfeld 11 erzeugt, können die Lagerscheiben 3 von den Schenkeln 52 abgehoben werden. Die Welle 2 wird dann in axialer Richtung bewegt werden, bis die darstellungsgemäss rechten axialen Begrenzungsflächen 31 auf den ihnen zugewandten Schenkeln 52 aufliegen. Dies ist die zweite stabile Position. Somit kann die Welle 2 zwischen zwei stabilen Endpositionen in axialer Richtung hin- und herbewegt werden. Ein derartiger linearer Aktuator kann beispielsweise zum Öffnen und Schliessen eines Durchlasses verwendet werden.

Natürlich ist es auch möglich, einen Drehantrieb für die Welle 2 und die Lagervorrichtung 1 so anzusteuern, dass die Welle 2 eine kombinierte Hub-Dreh-Bewegung ausführt.

## Patentansprüche

1. Elektromagnetische Lagervorrichtung zur berührungslosen Lagerung einer Welle (2) bezüglich einer durch eine Längsachse (A) festgelegten axialen Richtung, umfassend mindestens zwei axial beabstandete Lagerscheiben (3), die fest mit der Welle (2) verbunden sind und sich jeweils in radialer Richtung erstrecken, sowie einen die Welle (2) umgebenden Stator (4), welcher einen Permanentmagneten (7) zum Erzeugen eines permanentmagnetischen Flusses aufweist, der eine Lagerkraft auf die Lagerscheiben (3) bewirkt, und welcher Stator (4) elektrische Wicklungen (6) zum Erzeugen eines magnetischen Steuerflusses aufweist, dadurch gekennzeichnet, dass der Stator (4) die Lagerscheiben (3) radial umschliesst.

2. Elektromagnetische Lagervorrichtung nach Anspruch 1, bei welcher die elektrischen Wicklungen (6) den radial äusseren Begrenzungsflächen (32) der Lagerscheiben (3) gegenüberliegend angeordnet sind.

3. Elektromagnetische Lagervorrichtung nach Anspruch 1 oder 2, bei welcher der Permanentmagnet (7) axial magnetisiert ist.

4. Elektromagnetische Lagervorrichtung nach einem der Ansprüche 1-3, bei welcher der Stator (4) mindestens zwei bezüglich der axialen Richtung hintereinander angeordnete Lagerstellen (5) umfasst, die jeweils zwei radial nach innen verlaufende Schenkel (52) sowie ein im wesentlichen parallel zur Längsachse (A) verlaufendes, die Schenkel (52) verbindendes Basisteil (51) aufweisen, sodass die Schenkel (52) zusammen mit dem Basisteil (51) ein im wesentlichen U-förmiges Profil bilden.

5. Elektromagnetische Lagervorrichtung nach Anspruch 4, wobei jede Lagerscheibe (3) so angeordnet ist, dass sie sich jeweils zwischen die beiden Schenkel (52) einer Lagerstelle (5) erstreckt, und wobei an jedem Basisteil (51) eine elektrische Wicklung (6) vorgesehen ist.

6. Elektromagnetische Lagervorrichtung nach einem der Ansprüche 4 oder 5, bei welcher zwischen zwei axial benachbarten Lagerstellen (5) jeweils ein Permanentmagnet (7) vorgesehen ist.

7. Elektromagnetische Lagervorrichtung nach einem der Ansprüch 4-6, bei welcher mindestens drei bezüglich der axialen Richtung hintereinander angeordnete Lagerstellen (5) vorgesehen sind, zwischen denen jeweils ein Permanentmagnet (7) vorgesehen ist, wobei jeder Permanentmagnet (7) in entgegengesetzter Richtung axial magnetisiert ist wie der ihm vorangehend angeordnete Permanentmagnet (7).

8. Elektromagnetische Lagervorrichtung nach einem der vorangehenden Ansprüche, bei welcher jeder Permanentmagnet (7) als Ringscheibe ausgestaltet ist, welche die Welle (2) umgibt.

9. Elektromagnetische Lagervorrichtung nach einem der Ansprüche 3-8, bei welcher die radial innenliegenden Enden der Schenkel (52) als ausgeprägte Pole (522) ausgebildet sind.

10. Elektromagnetische Lagervorrichtung nach einem der vorangehenden Ansprüche, wobei der permanentmagnetische Fluss durch die Welle (2) geführt wird.

11. Verwendung einer elektromagnetischen Lagervorrichtung (1) gemäss einem der vorangehenden Ansprüche als linearer Aktuator, insbesondere als bistabiler linearer Aktuator.
